# EUROPEAN PATENT APPLICATION

(11) **EP 4 671 980 A1**
(43) Date of publication of application: **31.12.2025**
(21) Application number: 25175826.4
(22) Date of filing: 12.05.2025
(51) Int. Cl.: G06F 9/455, G06F 9/50

(54) **METHOD AND DEVICE FOR CONTROLLING STARTING OF VIRTUAL MACHINE BASED ON DATA PROCESSING UNIT**

(30) Priority: 20.06.2024 CN 202410805425
(71) Applicant: Beijing Volcano Engine Technology Co., Ltd., Beijing 101299 (CN)
(72) Inventor: LI, Zebin, Beijing, 100028 (CN); HUANG, Zijing, Beijing, 100028 (CN)
(74) Representative: Marks & Clerk LLP

(57) **Abstract**

The embodiments of the present disclosure provide a method and a device for controlling a starting of a virtual machine based on a data processing unit, DPU. The method comprises: sending (S301), in response to receiving an instruction for starting a plurality of virtual machines by the DPU, an instruction for creating a plurality of virtual machine managers to a host to which the DPU belongs, wherein one virtual machine manager is configured to manage one virtual machine; creating (S302) a plurality of virtual machine managers by the host, and concurrently starting a plurality of virtual machines by the virtual machine managers using a resource on the host; and offloading (S303), in response to a completion of concurrently starting the virtual machines, the virtual machine managers from the host to the DPU, and managing the started virtual machines by the virtual machine managers using a resource on the DPU.

## Description

### FIELD

The embodiments of the present disclosure relate to a field of cloud computing technology, and more particularly to a method and a device for controlling a starting of a virtual machine based on a data processing unit.

### BACKGROUND

Virtualization technology is a fundamental technology in a cloud computing industry. Host and virtual machine are two common virtualization concepts. From a perspective of the host, the virtual machine is equivalent to a process. User programs can run on both the host and the virtual machine. The user programs can hardly feel a difference in underlying operating systems.

In the current computing environment, in order to improve performance and efficiency, a common practice is to offload virtualized workloads to the data processing unit (DPU). By assigning virtualized workloads to a dedicated DPU, a load pressure on the host can be reduced, thereby improving the overall performance of the system.

The inventors have discovered that the prior art has at least the following technical problems, when a plurality of virtual machines need to be started concurrently, the process of concurrently starting a plurality of virtual machines in the prior art is too time-consuming and cannot meet the user's business needs for rapid capacity expansion.

### SUMMARY

The embodiments of the present disclosure provide a method and a device for controlling a starting of a virtual machine based on a data processing unit, which can meet the user's needs for rapid capacity expansion.

In a first aspect, an embodiment of the present disclosure provides a method for controlling a starting of a virtual machine based on a data processing unit. The method comprises: sending, in response to receiving an instruction for starting a plurality of virtual machines by the DPU, an instruction for creating a plurality of virtual machine managers to a host to which the DPU belongs, wherein one virtual machine manager is configured to manage one virtual machine; creating a plurality of virtual machine managers by the host, and concurrently starting a plurality of virtual machines by the plurality of virtual machine managers using a resource on the host; and offloading, in response to a completion of concurrently starting the plurality of virtual machines, the plurality of virtual machine managers from the host to the DPU, and managing the plurality of started virtual machines by the plurality of virtual machine managers using a resource on the DPU.

In a second aspect, an embodiment of the present disclosure provides a device for controlling a starting of a virtual machine based on a data processing unit (DPU). The device comprises: a sending unit configured to send, in response to receiving an instruction for starting a plurality of virtual machines by the DPU, an instruction for creating a plurality of virtual machine managers to a host to which the DPU belongs, wherein one virtual machine manager is configured to manage one virtual machine; a concurrently starting unit configured to create a plurality of virtual machine managers by the host, and concurrently start a plurality of virtual machines by the plurality of virtual machine managers using a resource on the host; and an offloading unit configured to offload, in response to a completion of concurrently starting the plurality of virtual machines, the plurality of virtual machine managers from the host to the DPU, and manage the plurality of started virtual machines by the plurality of virtual machine managers using a resource on the DPU.

In a third aspect, an embodiment of the present disclosure provides an electronic device. The electronic device comprises a processor and a memory. Wherein the memory stores computer-executable instructions. And the processor executes the computer-executable instructions stored in the memory to cause at least one processor to execute a method for controlling a starting of a virtual machine based on a data processing unit as described in the first aspect and various possible designs of the first aspect.

In a fourth aspect, an embodiment of the present disclosure provides a computer-readable storage medium, which stores computer-executable instructions. Wherein the computer-executable instructions, when executed by a processor, implement the method for controlling the starting of the virtual machine based on the data processing unit as described in the first aspect and various possible designs of the first aspect.

In a fifth aspect, an embodiment of the present disclosure provides a computer program product comprising a computer program. Wherein the computer program, when executed by a processor, implements the method for controlling the starting of the virtual machine based on the data processing unit as described in the first aspect and various possible designs of the first aspect.

The present embodiment provides a method and a device for controlling a starting of a virtual machine based on a data processing unit. The method comprises: sending, in response to receiving an instruction for starting a plurality of virtual machines by the DPU, an instruction for creating a plurality of virtual machine managers to a host to which the DPU belongs, wherein one virtual machine manager is configured to manage one virtual machine; creating a plurality of virtual machine managers by the host, and concurrently starting a plurality of virtual machines by the plurality of virtual machine managers using a resource on the host; and offloading, in response to a completion of concurrently starting the plurality of virtual machines, the plurality of virtual machine managers from the host to the DPU, and managing the plurality of started virtual machines by the plurality of virtual machine managers using a resource on the DPU. In this technical solution, the plurality of virtual machines are started concurrently by the plurality of virtual machine managers created on the host, thereby reducing the load pressure of the DPU and the information interaction between the host and the DPU, and ensuring the rapid starting of the plurality of virtual machines and meeting the user's demand for rapid capacity expansion. In addition, after the starting of the plurality of virtual machines is completed, the load pressure of the host can be reduced by offloading the plurality of virtual machine managers to the DPU.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG. 1 is a schematic diagram of a method for controlling a starting of a virtual machine based on a DPU provided in the prior art;
FIG. 2 is a first schematic diagram of a method for controlling a starting of a virtual machine based on a DPU provided in an embodiment of the present disclosure;
FIG. 3 is a first flowchart of a method for controlling a starting of a virtual machine based on a DPU provided in an embodiment of the present disclosure;
FIG. 4 is a second schematic diagram of a method for controlling a starting of a virtual machine based on a DPU provided in an embodiment of the present disclosure;
FIG. 5 is a second flowchart of a method for controlling a starting of a virtual machine based on a DPU provided in an embodiment of the present disclosure;
FIG. 6 is a schematic diagram of a method for offloading a virtual machine manager provided by an embodiment of the present disclosure;
FIG. 7 is a schematic diagram of a structure of a device for controlling a starting of a virtual machine based on a DPU provided in an embodiment of the present disclosure; and
FIG. 8 is a schematic diagram of a structure of an electronic device provided in an embodiment of the present disclosure.

### DETAILED DESCRIPTION OF EMBODIMENTS

In order to make the purpose, technical solution and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

Some terms in the embodiments of the present disclosure are explained below.

Virtualization technology: It is the fundamental technology in the cloud computing industry. The host and the virtual machine are two common virtualization concepts. Under the Kernel-based Virtual Machine (KVM) solution, the host system is often the Linux operating system. On the host, a virtual machine can be simulated by hardware virtualization and other technologies. From the perspective of the host, the virtual machine is equivalent to a process. User programs can run on both the host and the virtual machine, and user programs can hardly feel the difference in the underlying operating system. The virtual machine is one of the most widely used product forms in the cloud computing, and virtualization technology is also the foundation technology in the cloud computing.

VMM: A Virtual Machine Manager is software that can be installed on physical hardware. It uses virtualization technology to decompose a single physical machine into a plurality of virtual machines, thereby running a plurality of operating systems on the same physical hardware. The QEMU process is currently the most widely used VMM.

VM: A Virtual Machine is an emulator for a computer system. It can provide the functions of a physical computer by simulating a complete computer system with complete hardware system functions and running in a completely isolated environment by software.

QEMU: Quick Emulator (QEMU) and KVM are currently the most mainstream virtualization solutions.

DPU: Data Processing Unit (DPU) is a data processing unit that is commonly configured to accelerate computer vision, natural language processing and other artificial intelligence applications.

DPU is a special hardware that can perform highly parallel computing tasks and is more efficient than the universal CPU. System on Chip (SoC) and Field Programmable Gate Array (FPGA) are the current mainstream DPU design solutions.

IaaS: Infrastructure as a Service (IaaS) refers to a service model that provides infrastructure as a service by the network and charges users based on their actual usage or occupation of resources. By using IaaS, users can deploy and run any software, including operating systems and application software, on the infrastructure provided by the cloud service provider.

ECS: Elastic Compute Service (ECS) is a secure, stable, and elastically scalable virtual server on the cloud. It includes CPU, memory, hard disk, network and other resources. It is a computer service that is superior to physical servers and has the characteristics of simplicity, efficiency, and security. It is called a computing unit in the field.

PaaS: Platform as a Service is a cloud computing model that provides a platform to develop, run, and manage applications without the need to build and maintain the infrastructure typically associated with developing and launching applications. By using PaaS, developers can focus on building their applications and rely on the platform to handle tasks such as scalability, security, and availability. This can help reduce development time, reduce costs, and improve the overall quality of applications.

In the current computing environment, in order to improve performance and efficiency, a common practice is to offload virtualized workloads to the data processing unit (DPU). By assigning virtualized workloads to a dedicated DPU, the load pressure on the host can be reduced, thereby improving the overall performance of the system.

The virtualized workloads include the creation, destruction, and management of virtual machines. More specifically, virtualized workloads can include VMM processes and QEMU processes. By offloading these tasks to the DPU, the load on CPU can be reduced, allowing CPU to focus more on other important computing tasks. DPU is generally characterized by high performance, low latency, and low power consumption, making them very suitable for processing virtualized workloads.

In general, offloading virtualized workloads to the DPU can improve the overall performance, efficiency, and security of the system, and is a technology worthy of promotion.

DPU is a data processing unit, which is often configured to accelerate computer vision, natural language processing and other artificial intelligence applications. In terms of physical form, DPU is an independent computing card that can be connected to a traditional server by interfaces such as PCIe. The size and power consumption of DPU are comparable to those of a network card.

The widespread application of DPU is closely related to the gradual failure of Moore's Law. The widespread demand for digitalization has led to a rapid increase in the demand for computing power, but the failure of Moore's Law has made it impossible to simply meet the demand for computing power by vertically expanding the capabilities of a single chip. Therefore, many customized chips have been produced to improve the overall computing power from the perspective of horizontal expansion. DPU is a typical example of server scenarios in data centers and cloud computing scenarios. By adding a customized computing card, workloads that originally have weak CPU performance requirements and high parallelism are offloaded to the DPU, thereby saving server resources. After inserting the DPU, the overall utilization rate, sales rate and power consumption of the server can be improved. Therefore, a large number of customized DPU computing cards have appeared in the industry, and the workloads used for offloading are also diverse. Various server management workloads (such as security, storage, network and virtualization) can be offloaded to the corresponding customized DPU computing cards.

At present, with the rapid development of cloud computing, more and more enterprises and individual users choose to offload their business to cloud platforms. As one of the infrastructures of cloud computing, virtual machines not only meet various business demands, but also face constantly growing capacity expansion. Especially in the business scenario of elastic capacity expansion, users need to quickly start a plurality of virtual machines concurrently to meet the high availability and flexibility of the business.

The traditional virtual machine services (such as Infrastructure as a Service, IaaS) and cloud-native services supported by secure containers (such as Platform as a Service, PaaS) need to meet the business needs of rapid capacity expansion of virtual machines. In the IaaS scenario, users need to quickly increase or decrease virtual machine instances according to changes in business load. For example, during the busy sales season, e-commerce platforms need to quickly expand capacity to cope with a large number of user access requests, while in the sales off-season, virtual machine instances can be appropriately reduced to save costs. Rapidly starting a plurality of virtual machines concurrently is the key to achieving elastic capacity expansion, which can provide immediately available computing resources to meet the high concurrency requirements by the user. Alternatively, in a shorter period of time during the day, during peak business hours, a large number of orders flood into the e-commerce platform, or a large number of viewers flood into the short video platform, the e-commerce platform and the short video platform need to quickly expand capacity and create more VM instances to meet the more computing demands for the business.

In the PaaS scenario, cloud-native applications are built and deployed based on container technology, which has higher demands on the rapid expansion and elastic scaling of businesses. The emergence of secure container technology makes the rapid capacity expansion of virtual machines more efficient and flexible. For example, an emerging online education platform needs to quickly expand application services based on the growth of user registrations and course reservations to ensure a smooth user experience and high-quality teaching. With the support of secure containers, a plurality of virtual machine instances can be quickly started concurrently to provide stable and reliable services.

In short, in the face of business needs for rapid capacity expansion of virtual machines, both traditional virtual machine businesses and cloud-native businesses supported by secure containers need to be able to rapidly and concurrently start a plurality of virtual machine instances to meet users' business needs for elastic capacity expansion. This will provide users with high availability, flexibility, and stability services, and further promote the development of cloud computing. In actual business scenarios, real business parties often receive requests from front-end customers for rapid and concurrent start, such as how many virtual machines can be started on 20 physical machines within 1 minute.

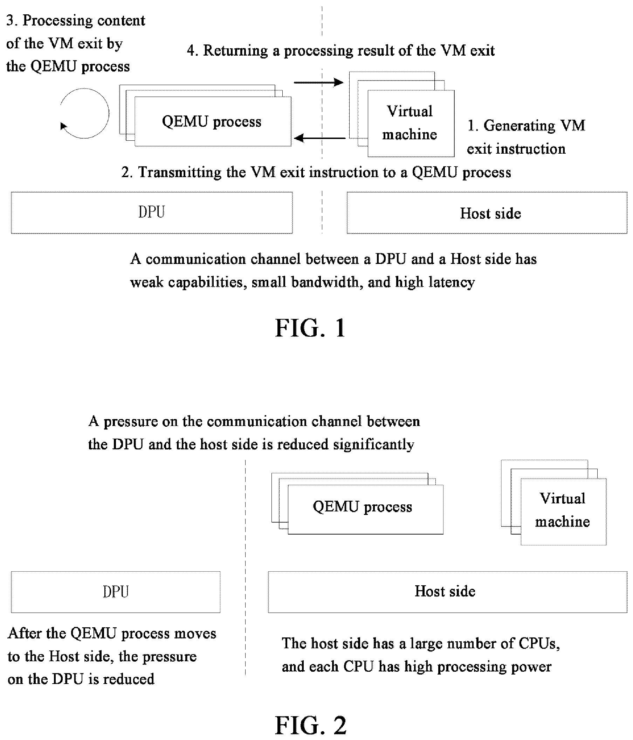

The inventors found that the prior art has at least the following technical problems. The concurrent start in the offloading scenario is shown in FIG. 1. During the concurrent start process, the VM will frequently exit (VM Exit). The VM Exit is a virtualization concept, that is, it is necessary to simulate the state or operation when it exits from the VM to the VMM (QEMU process). This exit process requires a large number of communication operations by the "communication channel between the DPU and the host". However, the communication channel between the DPU and the Host side has weak capabilities, small bandwidth, and high latency, which will aggravate the latency, especially when there is a large amount of communication.

In addition, since the DPU itself has a small number of CPUs and weak capabilities, in response to determining that a number of the concurrent processes (a number of the QEMU processes) exceeds a number of the CPU cores of the DPU itself, there will be a large amount of scheduling competition on the DPU, causing some QEMU processes to not be scheduled for a long time, further increasing the time it takes for the QEMU process to process VM Exit. Therefore, the process of concurrently starting VMs in the prior art takes too long time and cannot meet the user's business needs for rapid capacity expansion.

In response to the technical problems in the existing technology, the inventor's technical concept is as follows. In the concurrent start phase, a VMM (that is, a QEMU process) is created on the host side. When the virtual machine runs smoothly and the performance is relatively smooth, the QEMU process is dynamically offloaded to the DPU side. Thereby, saving resources on the host side and avoiding competition between the QEMU line and user processes which affects the performance of the virtual machine. As shown in FIG. 2, in the concurrent start phase, the QEMU process is started on the host to make full use of the CPU resources on the host side. The host side has a large number of CPUs, and each CPU has a high processing power. A plurality of QEMU processes can be quickly created to achieve rapid start of a plurality of virtual machines and reduce the pressure on the communication channel between the DPU and the host.

Accordingly, the steps may include the following. First, in response to receiving an instruction for starting a plurality of virtual machines by a data processing unit (DPU), an instruction for creating a plurality of virtual machine managers is sent to the host to which the DPU belongs, wherein one virtual machine manager is configured to manage one virtual machine. Then, a plurality of virtual machine managers are created by the host, and a plurality of virtual machines are started concurrently by the plurality of virtual machine managers using the resources on the host. Finally, in response to the completion of concurrently starting a plurality of virtual machines, the plurality of virtual machine managers are offloaded from the host to the DPU, and the plurality of started virtual machines are managed by the plurality of virtual machine managers using the resources on the DPU.

In this technical solution, the plurality of virtual machines are started concurrently by the plurality of virtual machine managers created on the host, thereby reducing the load pressure of the DPU and the information interaction between the host and the DPU, and ensuring the rapid starting of the plurality of virtual machines and meeting the user's demand for rapid capacity expansion. In addition, after the starting of the plurality of virtual machines is completed, the load pressure of the host can be reduced by offloading the plurality of virtual machine managers to the DPU.

The following is an implementation process of the method and the device for controlling the starting of the virtual machine based on the DPU involved in the embodiment of the present disclosure. Some examples are for illustrative purposes only and are not intended to be limiting. The subject for execution of the method for controlling the starting of the virtual machine based on the DPU involved in the embodiment of the present disclosure is an electronic device, which can be a terminal, a server, etc.

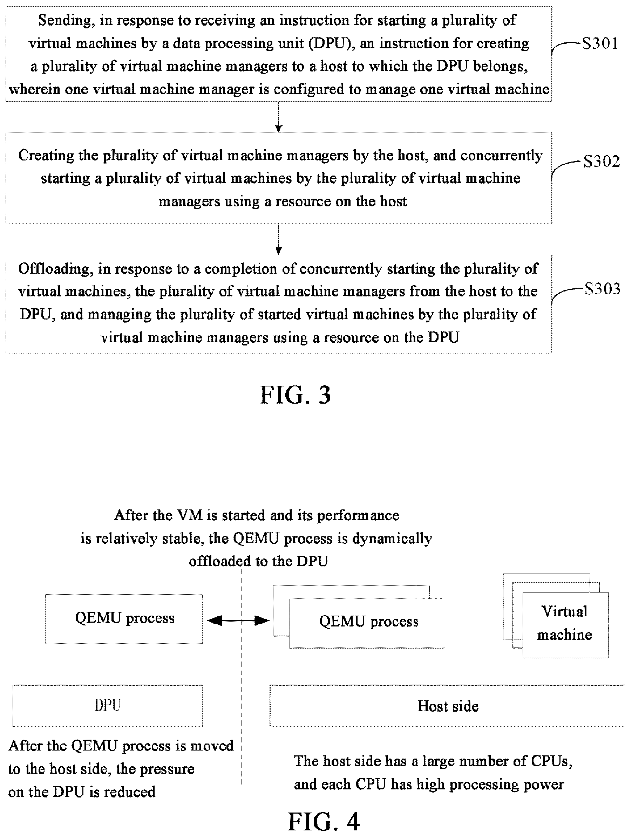

FIG. 3 is a flow chart of the method for controlling the starting of the virtual machine based on the DPU provided in the embodiment of the present disclosure. As shown in FIG. 3, the method for controlling the starting of the virtual machine may include the follows.

S301: Sending, in response to receiving an instruction for starting a plurality of virtual machines by DPU, an instruction for creating a plurality of virtual machine managers to a host to which the DPU belongs, wherein one virtual machine manager is configured to manage one virtual machine.

In the embodiments of the present disclosure, the virtual machine manager may include a VMM process. The VMM process may also be a QEMU process. One QEMU process is configured to manage one virtual machine.

It should be noted that in response to determining that the number of virtual machines need to be started concurrently is small, the plurality of virtual machine managers can be directly created by the DPU. In response to determining that the number of virtual machines need to be started concurrently is large, the instruction for creating the plurality of virtual machine managers is sent to the host to which the DPU belongs.

In some embodiments, this step may include the follows. In response to receiving the instruction for starting the plurality of virtual machines by the DPU, the number of the plurality of virtual machines is determined. If the number of the plurality of virtual machines is greater than the number of the CPU cores of the DPU itself, the instruction for creating the plurality of virtual machine managers is sent to the host to which the DPU belongs. If the number of the plurality of virtual machines is less than or equal to the number of CPU cores of the DPU itself, the instruction for creating the plurality of virtual machine managers is not sent to the host to which the DPU belongs, and the plurality of virtual machine managers are created by the DPU.

S302: Creating the plurality of virtual machine managers by the host, and concurrently starting a plurality of virtual machines by the plurality of virtual machine managers using a resource on the host.

In the embodiments of the present disclosure, during the process of concurrently starting the plurality of virtual machines by the plurality of virtual machine managers, the resources on the host are idle. That is, this step can use the idle resources on the host to concurrently start the plurality of virtual machines. In this process, the host performance will not be affected.

S303: Offloading, in response to a completion of concurrently starting the plurality of virtual machines, the plurality of virtual machine managers from the host to the DPU, and managing the plurality of started virtual machines by the plurality of virtual machine managers using a resource on the DPU.

In some embodiments, when a notification of the completion of the starting reported by a virtual machine is received and the completion of concurrently starting the plurality of virtual machines is determined, the plurality of virtual machine managers are offloaded from the host to the DPU.

In other embodiments, after the concurrently starting of the plurality of virtual machines is executed, a running indicator related to the plurality of virtual machines is monitored. The running indicator include any of a log, a device running status, and communication demand between the DPU and the host. After the completion of concurrently starting the plurality of virtual machines is determined based on the running indicator related to the plurality of virtual machines, the plurality of virtual machine managers are offloaded from the host to the DPU.

Optionally, the number of the communication demands between the DPU and the host includes a number of virtual machine exit instructions. The virtual machine exit instruction is used to instruct the virtual machine to exit from the client side and return to the host side, and obtain the configuration information corresponding to the virtual machine from the host side. Accordingly, after the concurrently starting of the plurality of virtual machines is executed, the number of the virtual machine exit instructions related to the plurality of virtual machines is monitored. The number of the virtual machine exit instructions related to the plurality of virtual machines is used as the running indicator related to the plurality of virtual machines to determine whether the concurrently starting of the plurality of virtual machines is completed.

Accordingly, in a process of offloading the plurality of virtual machine managers from the host to the DPU when the completion of concurrently starting the plurality of virtual machines is determined based on the running indicator related to the plurality of virtual machines, it is determined that concurrently starting the plurality of virtual machines is completed, and the plurality of virtual machine managers are offloaded from the host to the DPU, when the changing trend of the number of virtual machine exit instructions is in a stable state.

In some embodiments, in the process of determining whether the changing trend of the number of virtual machine exit instructions is in a stable state, the number of the virtual machine exit instructions corresponding to the virtual machine is obtained periodically. If the number of the virtual machine exit instructions obtained within a first preset time period is less than or equal to the first preset number, then it is determined that the changing trend of the number of the virtual machine exit instructions is in the stable state.

In the embodiments of the present disclosure, the values of the first preset time period and the first preset number are not specifically limited and can be set and modified according to demand. Optionally, due to different configurations of the virtual machine, when the performance of each virtual machine reaches a stable state, the number of the virtual machine exit instructions is also different. Therefore, the first preset number can be adaptively adjusted according to the configuration information of each virtual machine.

In some other embodiments, as shown in FIG. 4, the virtual machine manager is a QEMU process. In response to the completion of concurrently starting of the plurality of virtual machines and the stable performance of the virtual machines, the plurality of QEMU processes are offloaded from the host to the DPU. Optionally, if the number of the VM Exits obtained within the first preset time period is less than or equal to the first preset number, it is determined that the starting of the virtual machine is completed and the performance of the virtual machine is stable.

The embodiments of the present disclosure provide the method for controlling the starting of the virtual machine based on a DPU. The method comprises: sending, in response to receiving an instruction for starting a plurality of virtual machines by the DPU, an instruction for creating a plurality of virtual machine managers to a host to which the DPU belongs, wherein one virtual machine manager is configured to manage one virtual machine; creating a plurality of virtual machine managers by the host, and concurrently starting a plurality of virtual machines by the plurality of virtual machine managers using a resource on the host; and offloading, in response to a completion of concurrently starting the plurality of virtual machines, the plurality of virtual machine managers from the host to the DPU, and managing the plurality of started virtual machines by the plurality of virtual machine managers using a resource on the DPU. In this technical solution, the plurality of virtual machines are started concurrently by the plurality of virtual machine managers created on the host, thereby reducing the load pressure of the DPU and the information interaction between the host and the DPU, and ensuring the rapid starting of the plurality of virtual machines and meeting the user's demand for rapid capacity expansion. In addition, after the starting of the plurality of virtual machines is completed, the load pressure of the host can be reduced by offloading the plurality of virtual machine managers to the DPU.

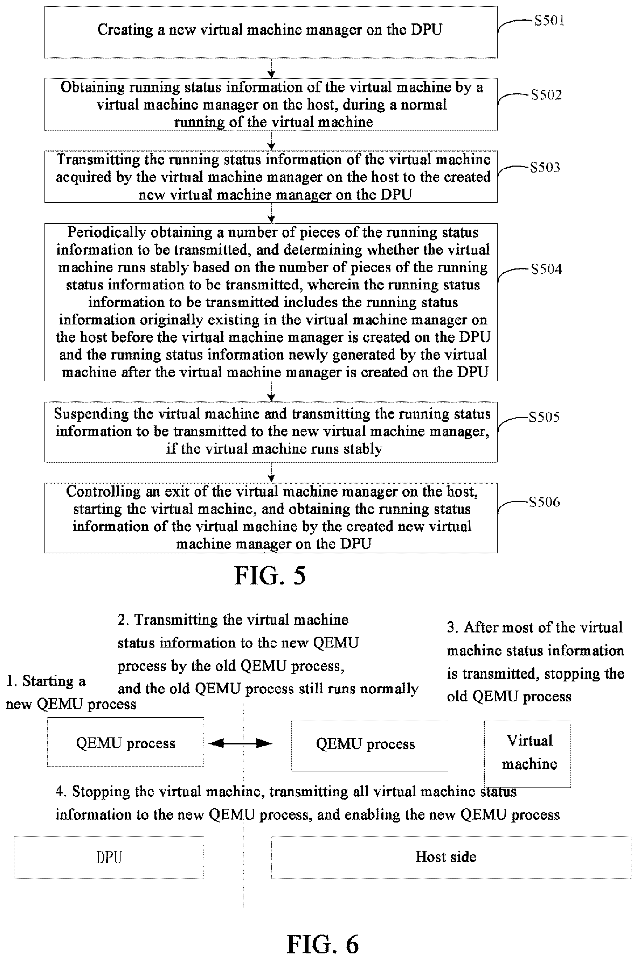

FIG. 5 is a second flowchart of the method for controlling the starting of the virtual machine based on the DPU provided in the embodiment of the present disclosure. And the method for dynamically offloading the virtual machine manager is described in detail in the embodiment of the present disclosure. As shown in FIG. 5, the method for offloading the plurality of virtual machine managers from the host to the DPU, wherein the method may include S501 to S506.

S501: Creating a new virtual machine manager on the DPU.

Exemplarily, as shown in FIG. 6, the virtual machine manager is the QEMU process, and the new QEMU process is started on the DPU.

S502: Obtaining running status information of a virtual machine by the virtual machine manager on the host, during a normal running process of the virtual machine.

Exemplarily, as shown in FIG. 6, the virtual machine manager on the host is an old QEMU process. During the normal running process of the virtual machine, the running status information of the virtual machine is first obtained by the old QEMU process. The running status information of the virtual machine can be any attribute information related to the virtual machine. For example, the running status information can be the configuration information, running information, load information, etc. of the virtual machine.

S503: Transmitting the running status information of the virtual machine acquired by the virtual machine manager on the host to the created new virtual machine manager on the DPU.

In some embodiments, as shown in FIG. 6, the virtual machine manager may be a QEMU process. The virtual machine manager on the host is the old QEMU process, and the created new virtual machine manager on the DPU is the new QEMU process. In this case, the old QEMU process transmits the running status information of the virtual machine to the new QEMU process. At this time, the old QEMU process still runs normally, and all the Exit instructions of the VM are processed by the old QEMU process. That is, the running status information of the virtual machine is still obtained by the old QEMU process.

S504: Periodically obtaining the number of pieces of the running status information to be transmitted, and determining whether the virtual machine runs stably based on the number of pieces of the running status information to be transmitted, wherein the running status information to be transmitted includes the running status information originally existing in the virtual machine manager on the host before the virtual machine manager is created on the DPU, and the running status information newly generated by the virtual machine after the virtual machine manager is created on the DPU.

In the embodiments of the present disclosure, after the virtual machine is started and runs stably, the number of pieces of the running status information newly generated by the virtual machine is also relatively stable. Therefore, whether the running of the virtual machine is stable can be determined based on the number of pieces of the running status information to be transmitted.

In some embodiments, in a process of determining, based on the number of pieces of the running status information to be transmitted, whether the virtual machine runs stably, if the number of pieces of the running status information to be transmitted obtained each time within a second preset time period is less than or equal to the second preset number, it is determined that the virtual machine runs stably. If the number of pieces of the running status information to be transmitted obtained each time within the second preset time period is greater than the second preset number, it is determined that the virtual machine runs unstably.

In the embodiments of the present disclosure, the second preset time period and the second preset number are not specifically limited and can be set and modified according to demand.

In some other embodiments, as shown in FIG. 6, after most pieces of the virtual machine state information are transmitted, the old QEMU process is stopped. Accordingly, in a process of determining, based on the number of pieces of the running status information to be transmitted, whether the virtual machine runs stably, the number of pieces of running state information to be transmitted and the number of pieces of running state information that has been transmitted are obtained. And if the ratio of the number of pieces of running state information to be transmitted to the number of pieces of running state information that has been transmitted is less than a preset ratio, it is determined that the virtual machine runs stably.

In the embodiments of the present disclosure, the value of the preset ratio is not specifically limited and can be set and modified according to demand.

S505: Suspending the virtual machine and transmitting the running status information to be transmitted to the new virtual machine manager, if the virtual machine runs stably.

Exemplarily, as shown in FIG. 6, the virtual machine is suspended, all virtual machine state information is transmitted to the new QEMU process, and the new QEMU process is enabled.

S506: Controlling an exit of the virtual machine manager on the host, starting the virtual machine, and obtaining, the running status information of the virtual machine by the created new virtual machine manager on the DPU.

Exemplarily, as shown in FIG. 6, after the new QEMU process is enabled, all Exit instructions of the VM are processed by the new QEMU process. That is, the running status information of the virtual machine is obtained by the new QEMU process.

It should be noted that in response to determining that the remaining resources of the host are fewer, in order to avoid the impact of the QEMU process on the host performance, the plurality of QEMU processes can be offloaded from the host to the DPU. Accordingly, before creating the plurality of virtual machine managers by the host and concurrently starting the plurality of virtual machines by the plurality of virtual machine managers using the resources on the host, the method further includes the follows. The remaining resources of the host are obtained, wherein the remaining resources include remaining resources of the CPU and/or remaining resources of the memory. If the remaining resources of the host are less than the preset resource threshold, then the plurality of virtual machine managers are offloaded from the host to the DPU, and the plurality of started virtual machines are managed by the plurality of virtual machine managers using the CPU resources on the DPU.

In the embodiments of the present disclosure, in response to determining that the remaining resources of the host are fewer, the plurality of QEMU processes can be offloaded from the host to the DPU, thereby avoiding the impact of the QEMU process on the host performance and ensuring the stability of the host performance.

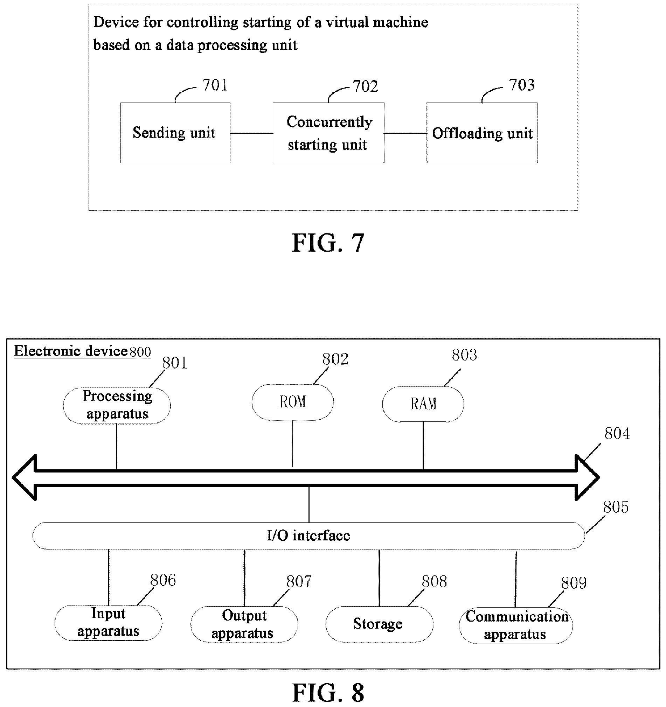

FIG. 7 is a schematic diagram of a structure of a device for controlling a starting of a virtual machine based on a DPU provided in an embodiment of the present disclosure. As shown in FIG. 7, the device for controlling the starting of the virtual machine includes a sending unit 701, a concurrently starting unit 702 and an offloading unit 703.

The sending unit 701 is configured to send, in response to receiving an instruction for starting a plurality of virtual machines by DPU, an instruction for creating a plurality of virtual machine managers to a host to which the DPU belongs, wherein one virtual machine manager is configured to manage one virtual machine.

The concurrently starting unit 702 is configured to create the plurality of virtual machine managers by the host, and concurrently start the plurality of virtual machines by the plurality of virtual machine managers using a resource on the host.

The offloading unit 703 is configured to offload, in response to a completion of concurrently starting the plurality of virtual machines, the plurality of virtual machine managers from the host to the DPU, and manage the plurality of started virtual machines by the plurality of virtual machine managers using the resource on the DPU.

According to one or more embodiments of the present disclosure, the offloading unit 703 is configured to perform an action of offloading, in response to the completion of concurrently starting the plurality of virtual machines, the plurality of virtual machine managers from the host to the DPU, by the following: offloading, in response to receiving a notification of a completion of the starting reported by a virtual machine and determining that the concurrently starting of the plurality of virtual machines is completed, the plurality of virtual machine managers from the host to the DPU; or monitoring, after executing the concurrently starting of the plurality of virtual machines, a running indicator related to the plurality of virtual machines, wherein the running indicator comprises any of a log, a device running status, and communication demand between a DPU and a host; and offloading, after determining that the concurrently starting of the plurality of virtual machines is completed based on the running indicator related to the plurality of virtual machines, the plurality of virtual machine managers from the host to the DPU.

According to one or more embodiments of the present disclosure, the offloading unit 703 is configured to perform the following: after executing the concurrently starting of the plurality of virtual machines, monitoring a number of virtual machine exit instructions related to the plurality of virtual machines; wherein the virtual machine exit instruction is used to instruct to return a virtual machine from a client side to a host side and obtain configuration information corresponding to the virtual machine from the host side; wherein offloading, after determining that the concurrently starting of the plurality of virtual machines is completed based on the running indicator related to the plurality of virtual machines, the plurality of virtual machine managers from the host to the DPU comprising: determining, in response to determining that a changing trend of the number of the virtual machine exit instructions is in a stable state, that the concurrently starting of the plurality of virtual machines is completed, and offloading the plurality of virtual machine managers from the host to the DPU.

According to one or more embodiments of the present disclosure, the offloading unit 703 is configured to perform a process of determining that the changing trend of the number of the virtual machine exit instructions is in the stable state, by the following: periodically obtaining the number of the virtual machine exit instructions corresponding to the virtual machine; and determining that the changing trend of the number of the virtual machine exit instructions is in the stable state, in response to determining that the number of the virtual machine exit instructions obtained within a first preset time period is less than or equal to a first preset number.

According to one or more embodiments of the present disclosure, the offloading unit 703 is configured to perform an action of offloading the plurality of virtual machine managers from the host to the DPU, by the following: creating a new virtual machine manager on the DPU; obtaining running status information of the virtual machine by a virtual machine manager on the host, during a normal running process of the virtual machine; transmitting the running status information of the virtual machine obtained by the virtual machine manager on the host to the created new virtual machine manager on the DPU; periodically obtaining a number of pieces of the running status information to be transmitted, and determining whether the virtual machine runs stably based on the number of pieces of the running status information to be transmitted, wherein the running status information to be transmitted comprises the running status information originally existing in the virtual machine manager on the host before the virtual machine manager is created on the DPU and the running status information newly generated by the virtual machine after the virtual machine manager is created on the DPU; suspending the virtual machine and transmitting the running status information to be transmitted to the new virtual machine manager, in response to determining that the virtual machine runs stably; and controlling an exit of the virtual machine manager on the host, starting the virtual machine, and obtaining the running status information of the virtual machine by the created new virtual machine manager on the DPU.

According to one or more embodiments of the present disclosure, the offloading unit 703 is configured to perform an action of determining whether the virtual machine runs stably based on the number of pieces of the running status information to be transmitted, by the following: determining that the virtual machine runs stably, in response to determining that the number of pieces of the running status information to be transmitted obtained each time within a second preset time period is less than or equal to a second preset number; and determining that the virtual machine runs unstably, in response to determining that the number of pieces of the running status information to be transmitted obtained each time within the second preset time period is greater than the second preset number.

According to one or more embodiments of the present disclosure, the offloading unit 703 is configured to perform an action of determining whether the virtual machine runs stably based on the number of pieces of the running status information to be transmitted, by the following: obtaining the number of pieces of the running status information to be transmitted and a number of pieces of running status information that has been transmitted; and determining that the virtual machine runs stably, in response to determining that a ratio of the number of pieces of the running status information to be transmitted to the number of pieces of the running status information that has been transmitted is less than a preset ratio.

According to one or more embodiments of the present disclosure, the offloading unit 703 is further configured to perform the following: obtaining remaining resources of the host, wherein the remaining resources include remaining resources of a CPU and/or remaining resources of a memory; and in response to determining that the remaining resources of the host are less than a preset resource threshold, offloading the plurality of virtual machine managers from the host to the DPU, and managing the plurality of started virtual machines by the plurality of virtual machine managers using a CPU resources on the DPU.

According to one or more embodiments of the present disclosure, the sending unit 701 is configured to perform an action of sending, in response to receiving the instruction for starting the plurality of virtual machines by the DPU, the instruction for creating the plurality of virtual machine managers to the host to which the DPU belongs, by the following: determining, in response to receiving the instruction for starting the plurality of virtual machines by the DPU, a number of the plurality of virtual machines; and sending an instruction for creating the plurality of virtual machine managers to the host to which the DPU belongs, in response to determining that the number of the plurality of virtual machines is greater than a number of CPU cores of the DPU itself.

Referring to FIG. 8, it shows a schematic diagram of the structure of an electronic device 800 suitable for implementing the embodiments of the present disclosure. The electronic device 800 may be a terminal device or a server. The terminal device may include but is not limited to mobile terminals such as mobile phones, laptop computers, digital broadcast receivers, Personal Digital Assistants (PDAs), Portable Android Devices (PADs), Portable Media Players (PMPs), vehicle-mounted terminals (such as vehicle-mounted navigation terminals), etc., and fixed terminals such as digital TVs, desktop computers, etc. The electronic device shown in FIG. 8 is only an example and should not impose any limitations on the functions and scope of use of the embodiments of the present disclosure.

As shown in FIG. 8, the electronic device 800 may include a processing apparatus (e.g., a central processing unit, a graphics processing unit, etc.) 801, which may perform various appropriate actions and processes according to a program stored in a Read Only Memory (ROM) 802 or a program loaded from a storage 808 to a Random Access Memory (RAM) 803. Various programs and data required for the operation of the electronic device 800 are also stored in the RAM 803. The processing apparatus 801, the ROM 802, and the RAM 803 are connected to each other via a bus 804. An input/output (I/O) interface 805 is also connected to the bus 804.

Typically, the following apparatus may be connected to the I/O interface 805: input apparatus 806 including, for example, a touch screen, a touchpad, a keyboard, a mouse, a camera, a microphone, an accelerometer, a gyroscope, etc.; output apparatus 807 including, for example, a Liquid Crystal Display (LCD), a speaker, a vibrator, etc.; storage 808 including, for example, a magnetic tape, a hard disk, etc.; and communication apparatus 809. The communication apparatus 809 may allow the electronic device 800 to communicate with other devices wirelessly or by wire to exchange data. Although FIG. 8 shows the electronic device 800 with various apparatus, it should be understood that it is not required to implement or have all the apparatus shown. More or fewer apparatus may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program contains program code for executing the method shown in the flowchart. In such an embodiment, the computer program can be downloaded and installed from a network by a communication apparatus 809, or installed from a storage 808, or installed from a ROM 802. When the computer program is executed by the processing apparatus 801, the above-mentioned functions defined in the method of the embodiment of the present disclosure are executed.

It should be noted that the computer-readable medium mentioned above in the present disclosure may be a computer-readable signal medium or a non-transitory computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in combination with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, causing the electronic device to execute the method shown in the above embodiment.

Computer program code for performing the operations disclosed herein can be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer via any type of network, including a Local Area Network (LAN) or a Wide Area Network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each box in the flow chart or block diagram can represent a module, a program segment or a part of a code, and the module, the program segment or a part of the code contains one or more executable instructions for realizing the specified logical function. It should also be noted that in some implementations as replacements, the functions marked in the box can also occur in an order different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The units involved in the embodiments described in the present disclosure may be implemented by software or hardware. The name of a unit does not limit the unit itself in some cases. For example, the first acquisition unit may also be described as a "unit for acquiring at least two Internet Protocol addresses".

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a method for controlling a starting of a virtual machine based on a DPU is provided. The method comprises: sending, in response to receiving an instruction for starting a plurality of virtual machines by the DPU, an instruction for creating a plurality of virtual machine managers to a host to which the DPU belongs, wherein one virtual machine manager is configured to manage one virtual machine; creating a plurality of virtual machine managers by the host, and concurrently starting a plurality of virtual machines by the plurality of virtual machine managers using a resource on the host; and offloading, in response to a completion of concurrently starting the plurality of virtual machines, the plurality of virtual machine managers from the host to the DPU, and managing the plurality of started virtual machines by the plurality of virtual machine managers using a resource on the DPU.

According to one or more embodiments of the present disclosure, offloading, in response to the completion of concurrently starting the plurality of virtual machines, the plurality of virtual machine managers from the host to the DPU comprises: offloading, in response to receiving a notification of a completion of the starting reported by a virtual machine and determining that the concurrently starting of the plurality of virtual machines is completed, the plurality of virtual machine managers from the host to the DPU; or monitoring, after executing the concurrently starting of the plurality of virtual machines, a running indicator related to the plurality of virtual machines, wherein the running indicator comprises any of a log, a device running status, and communication demand between a DPU and a host; and offloading, after determining that the concurrently starting of the plurality of virtual machines is completed based on the running indicator related to the plurality of virtual machines, the plurality of virtual machine managers from the host to the DPU.

According to one or more embodiments of the present disclosure, the method further comprises: after executing the concurrently starting of the plurality of virtual machines, monitoring a number of virtual machine exit instructions related to the plurality of virtual machines; wherein the virtual machine exit instruction is used to instruct to return a virtual machine from a client side to a host side and obtain configuration information corresponding to the virtual machine from a host side; wherein offloading, after determining that the concurrently starting of the plurality of virtual machines is completed based on the running indicator related to the plurality of virtual machines, the plurality of virtual machine managers from the host to the DPU comprising: determining, in response to determining that a changing trend of the number of the virtual machine exit instructions is in a stable state, that the concurrently starting of the plurality of virtual machines is completed, and offloading the plurality of virtual machine managers from the host to the DPU.

According to one or more embodiments of the present disclosure, a process of determining that the changing trend of the number of the virtual machine exit instructions is in the stable state comprises: periodically obtaining the number of the virtual machine exit instructions corresponding to the virtual machine; and determining that the changing trend of the number of the virtual machine exit instructions is in the stable state, in response to determining that the number of the virtual machine exit instructions obtained within a first preset time period is less than or equal to a first preset number.

According to one or more embodiments of the present disclosure, offloading the plurality of virtual machine managers from the host to the DPU comprises: creating a new virtual machine manager on the DPU; obtaining running status information of the virtual machine by a virtual machine manager on the host, during a normal running of the virtual machine; transmitting the running status information of the virtual machine obtained by the virtual machine manager on the host to the created new virtual machine manager on the DPU; periodically obtaining a number of pieces of the running status information to be transmitted, and determining whether the virtual machine runs stably based on the number of pieces of the running status information to be transmitted, the running status information to be transmitted comprises the running status information originally existing in the virtual machine manager on the host before the virtual machine manager is created on the DPU and the running status information newly generated by the virtual machine after the virtual machine manager is created on the DPU; suspending the virtual machine and transmitting the running status information to be transmitted to the new virtual machine manager, in response to determining that the virtual machine runs stably; and controlling an exit of the virtual machine manager on the host, starting the virtual machine, and obtaining the running status information of the virtual machine by the created new virtual machine manager on the DPU.

According to one or more embodiments of the present disclosure, determining whether the virtual machine runs stably based on the number of pieces of the running status information to be transmitted comprises: determining that the virtual machine runs stably, in response to determining that the number of pieces of the running status information to be transmitted obtained each time within a second preset time period is less than or equal to a second preset number; and determining that the virtual machine runs unstably, in response to determining that the number of pieces of the running status information to be transmitted obtained each time within the second preset time period is greater than the second preset number.

According to one or more embodiments of the present disclosure, determining whether the virtual machine runs stably based on the number of pieces of the running status information to be transmitted comprises: obtaining the number of pieces of the running status information to be transmitted and a number of pieces of running status information that has been transmitted; and determining that the virtual machine runs stably, in response to determining that a ratio of the number of pieces of the running status information to be transmitted to the number of pieces of the running status information that has been transmitted is less than a preset ratio.

According to one or more embodiments of the present disclosure, the method further comprises, before creating the plurality of virtual machine managers by the host, and the concurrently starting the plurality of virtual machines by the plurality of virtual machine managers using the resource on the host, obtaining remaining resources of the host, wherein the remaining resources include remaining resources of a CPU and/or remaining resources of a memory; and in response to determining that the remaining resources of the host are less than a preset resource threshold, offloading the plurality of virtual machine managers from the host to the DPU, and managing the plurality of started virtual machines by the plurality of virtual machine managers using a CPU resources on the DPU.

According to one or more embodiments of the present disclosure, sending, in response to receiving the instruction for starting the plurality of virtual machines by the DPU, the instruction for creating the plurality of virtual machine managers to the host to which the DPU belongs comprises: determining, in response to receiving the instruction for starting the plurality of virtual machines by the DPU, a number of the plurality of virtual machines; and sending an instruction for creating the plurality of virtual machine managers to the host to which the DPU belongs, in response to determining that the number of the plurality of virtual machines is greater than a number of CPU cores of the DPU itself.

In a second aspect, according to one or more embodiments of the present disclosure, a device for controlling a starting of a virtual machine based on a data processing unit (DPU) is provided. The device for controlling the starting of the virtual machine includes a sending unit, a concurrently starting unit and an offloading unit. The sending unit is configured to send, in response to receiving an instruction for starting a plurality of virtual machines by the DPU, an instruction for creating a plurality of virtual machine managers to a host to which the DPU belongs, wherein one virtual machine manager is configured to manage one virtual machine. The concurrently starting unit is configured to create the plurality of virtual machine managers by the host, and concurrently start a plurality of virtual machines by the plurality of virtual machine managers using a resource on the host. The offloading unit is configured to offload, in response to a completion of concurrently starting the plurality of virtual machines, the plurality of virtual machine managers from the host to the DPU, and manage the plurality of started virtual machines by the plurality of virtual machine managers using a resource on the DPU.

According to one or more embodiments of the present disclosure, the offloading unit is configured to perform an action of offloading, in response to the completion of concurrently starting the plurality of virtual machines, the plurality of virtual machine managers from the host to the DPU, by the following: offloading, in response to receiving a notification of a completion of the starting reported by a virtual machine and determining that the concurrently starting of the plurality of virtual machines is completed, the plurality of virtual machine managers from the host to the DPU; or monitoring, after executing the concurrently starting of the plurality of virtual machines, a running indicator related to the plurality of virtual machines, wherein the running indicator comprises any of a log, a device running status, and communication demand between a DPU and a host; and offloading, after determining that the concurrently starting of the plurality of virtual machines is completed based on the running indicator related to the plurality of virtual machines, the plurality of virtual machine managers from the host to the DPU.

According to one or more embodiments of the present disclosure, the offloading unit is configured to perform the following: after executing the concurrently starting of the plurality of virtual machines, monitoring a number of virtual machine exit instructions related to the plurality of virtual machines; wherein the virtual machine exit instruction is used to instruct to return a virtual machine from a client side to a host side and obtain configuration information corresponding to the virtual machine from a host side; wherein offloading, after determining that the concurrently starting of the plurality of virtual machines is completed based on the running indicator related to the plurality of virtual machines, the plurality of virtual machine managers from the host to the DPU comprising: determining, in response to determining that a changing trend of the number of the virtual machine exit instructions is in a stable state, that the concurrently starting of the plurality of virtual machines is completed, and offloading the plurality of virtual machine managers from the host to the DPU.

According to one or more embodiments of the present disclosure, the offloading unit is configured to perform a process of determining that the changing trend of the number of the virtual machine exit instructions is in the stable state, by the following: periodically obtaining the number of the virtual machine exit instructions corresponding to the virtual machine; and determining that the changing trend of the number of the virtual machine exit instructions is in the stable state, in response to determining that the number of the virtual machine exit instructions obtained within a first preset time period is less than or equal to a first preset number.

According to one or more embodiments of the present disclosure, the offloading unit is configured to perform an action of offloading the plurality of virtual machine managers from the host to the DPU, by the following: creating a new virtual machine manager on the DPU; obtaining running status information of the virtual machine by a virtual machine manager on the host, during a normal running of the virtual machine; transmitting the running status information of the virtual machine obtained by the virtual machine manager on the host to the created new virtual machine manager on the DPU; periodically obtaining a number of pieces of the running status information to be transmitted, and determining whether the virtual machine runs stably based on the number of pieces of the running status information to be transmitted, the running status information to be transmitted comprises the running status information originally existing in the virtual machine manager on the host before the virtual machine manager is created on the DPU and the running status information newly generated by the virtual machine after the virtual machine manager is created on the DPU; suspending the virtual machine and transmitting the running status information to be transmitted to the new virtual machine manager, in response to determining that the virtual machine runs stably; and controlling an exit of the virtual machine manager on the host, starting the virtual machine, and obtaining the running status information of the virtual machine by the created new virtual machine manager on the DPU.

According to one or more embodiments of the present disclosure, the offloading unit is configured to perform an action of determining whether the virtual machine runs stably based on the number of pieces of the running status information to be transmitted, by the following: determining that the virtual machine runs stably, in response to determining that the number of pieces of the running status information to be transmitted obtained each time within a second preset time period is less than or equal to a second preset number; and determining that the virtual machine runs unstably, in response to determining that the number of pieces of the running status information to be transmitted obtained each time within the second preset time period is greater than the second preset number.

According to one or more embodiments of the present disclosure, the offloading unit is configured to perform an action of determining whether the virtual machine runs stably based on the number of pieces of the running status information to be transmitted, by the following: obtaining the number of pieces of the running status information to be transmitted and a number of pieces of running status information that has been transmitted; and determining that the virtual machine runs stably, in response to determining that a ratio of the number of pieces of the running status information to be transmitted to the number of pieces of the running status information that has been transmitted is less than a preset ratio.

According to one or more embodiments of the present disclosure, the offloading unit is further configured to perform the following: obtaining remaining resources of the host, wherein the remaining resources include remaining resources of a CPU and/or remaining resources of a memory; and in response to determining that the remaining resources of the host are less than a preset resource threshold, offloading the plurality of virtual machine managers from the host to the DPU, and managing the plurality of started virtual machines by the plurality of virtual machine managers using a CPU resources on the DPU.

According to one or more embodiments of the present disclosure, the sending unit is configured to perform an action of sending, in response to receiving the instruction for starting the plurality of virtual machines by the DPU, the instruction for creating the plurality of virtual machine managers to the host to which the DPU belongs, by the following: determining, in response to receiving the instruction for starting the plurality of virtual machines by the DPU, a number of the plurality of virtual machines; and sending an instruction for creating the plurality of virtual machine managers to the host to which the DPU belongs, in response to determining that the number of the plurality of virtual machines is greater than a number of CPU cores of the DPU itself.

In a third aspect, according to one or more embodiments of the present disclosure, an electronic device is provided. The electronic device comprises at least one processor and a memory. Wherein the memory stores computer-executable instructions. And the at least one processor executes the computer-executable instructions stored in the memory to cause at least one processor to execute a method for controlling a starting of a virtual machine based on a data processing unit as described in the first aspect and various possible designs of the first aspect.

In a fourth aspect, according to one or more embodiments of the present disclosure, a computer-readable storage medium, which stores computer-executable instructions, is provided. Wherein the computer-executable instructions, when executed by a processor, implement the method for controlling the starting of the virtual machine based on the data processing unit as described in the first aspect and various possible designs of the first aspect.

In a fifth aspect, according to one or more embodiments of the present disclosure, a computer program product comprising a computer program is provided. Wherein the computer program, when executed by a processor, implements the method for controlling the starting of the virtual machine based on the data processing unit as described in the first aspect and various possible designs of the first aspect.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in a plurality of embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for controlling a starting of a virtual machine based on a data processing unit, DPU, comprising:
sending (S301), in response to receiving an instruction for starting a plurality of virtual machines by the DPU, an instruction for creating a plurality of virtual machine managers to a host to which the DPU belongs, wherein one virtual machine manager is configured to manage one virtual machine;
creating (S302) a plurality of virtual machine managers by the host, and concurrently starting a plurality of virtual machines by the plurality of virtual machine managers using a resource on the host; and
offloading (S303), in response to a completion of concurrently starting the plurality of virtual machines, the plurality of virtual machine managers from the host to the DPU, and managing the plurality of started virtual machines by the plurality of virtual machine managers using a resource on the DPU.

2. The method according to claim 1, wherein offloading, in response to the completion of concurrently starting the plurality of virtual machines, the plurality of virtual machine managers from the host to the DPU comprises:
offloading, in response to receiving a notification of a completion of the starting reported by a virtual machine and determining that the concurrently starting of the plurality of virtual machines is completed, the plurality of virtual machine managers from the host to the DPU.

3. The method according to claim 1, wherein offloading, in response to the completion of concurrently starting the plurality of virtual machines, the plurality of virtual machine managers from the host to the DPU comprises:
monitoring, after executing the concurrently starting of the plurality of virtual machines, a running indicator related to the plurality of virtual machines, wherein the running indicator comprises any of a log, a device running status, and communication demand between a DPU and a host; and
offloading, after determining that the concurrently starting of the plurality of virtual machines is completed based on the running indicator related to the plurality of virtual machines, the plurality of virtual machine managers from the host to the DPU.

4. The method according to claim 3, further comprising: after executing the concurrently starting of the plurality of virtual machines, monitoring a number of virtual machine exit instructions related to the plurality of virtual machines; wherein the virtual machine exit instruction is used to instruct to return a virtual machine from a client side to a host side and obtain configuration information corresponding to the virtual machine from a host side.

5. The method according to claim 4, wherein offloading, after determining that the concurrently starting of the plurality of virtual machines is completed based on the running indicator related to the plurality of virtual machines, the plurality of virtual machine managers from the host to the DPU comprising:
determining, in response to determining that a changing trend of the number of the virtual machine exit instructions is in a stable state, that the concurrently starting of the plurality of virtual machines is completed, and offloading the plurality of virtual machine managers from the host to the DPU.

6. The method according to claim 5, wherein a process of determining that the changing trend of the number of the virtual machine exit instructions is in the stable state comprises:
periodically obtaining the number of the virtual machine exit instructions corresponding to the virtual machine; and
determining that the changing trend of the number of the virtual machine exit instructions is in the stable state, in response to determining that the number of the virtual machine exit instructions obtained within a first preset time period is less than or equal to a first preset number.

7. The method according to any of claims 1 to 6, wherein offloading the plurality of virtual machine managers from the host to the DPU comprises:
creating (S501) a new virtual machine manager on the DPU;
obtaining (S502) running status information of the virtual machine by a virtual machine manager on the host, during a normal running of the virtual machine;
transmitting (S503) the running status information of the virtual machine obtained by the virtual machine manager on the host to the created new virtual machine manager on the DPU;
periodically obtaining (S504) a number of pieces of the running status information to be transmitted, and determining whether the virtual machine runs stably based on the number of pieces of the running status information to be transmitted;
suspending (S505) the virtual machine and transmitting the running status information to be transmitted to the new virtual machine manager, in response to determining that the virtual machine runs stably; and
controlling (S506) an exit of the virtual machine manager on the host, starting the virtual machine, and obtaining the running status information of the virtual machine by the created new virtual machine manager on the DPU.

8. The method according to claim 7, wherein determining whether the virtual machine runs stably based on the number of pieces of the running status information to be transmitted comprises:
determining that the virtual machine runs stably, in response to determining that the number of pieces of the running status information to be transmitted obtained each time within a second preset time period is less than or equal to a second preset number; and
determining that the virtual machine runs unstably, in response to determining that the number of pieces of the running status information to be transmitted obtained each time within the second preset time period is greater than the second preset number.

9. The method according to claim 7, wherein determining whether the virtual machine runs stably based on the number of pieces of the running status information to be transmitted comprises:
obtaining the number of pieces of the running status information to be transmitted and a number of pieces of running status information that has been transmitted; and
determining that the virtual machine runs stably, in response to determining that a ratio of the number of pieces of the running status information to be transmitted to the number of pieces of the running status information that has been transmitted is less than a preset ratio.

10. The method according to any of claims 1 to 9, further comprising: before creating the plurality of virtual machine managers by the host, and the concurrently starting the plurality of virtual machines by the plurality of virtual machine managers using the resource on the host,
obtaining remaining resources of the host, wherein the remaining resources include remaining resources of a CPU and/or remaining resources of a memory; and
in response to determining that the remaining resources of the host are less than a preset resource threshold, offloading the plurality of virtual machine managers from the host to the DPU, and managing the plurality of started virtual machines by the plurality of virtual machine managers using a CPU resources on the DPU.

11. The method according to any of claims 1 to 10, wherein sending, in response to receiving the instruction for starting the plurality of virtual machines by the DPU, the instruction for creating the plurality of virtual machine managers to the host to which the DPU belongs comprises:
determining, in response to receiving the instruction for starting the plurality of virtual machines by the DPU, a number of the plurality of virtual machines; and
sending an instruction for creating the plurality of virtual machine managers to the host to which the DPU belongs, in response to determining that the number of the plurality of virtual machines is greater than a number of CPU cores of the DPU itself.

12. A device for controlling a starting of a virtual machine based on a data processing unit, DPU, comprising:
a sending unit (701) configured to send, in response to receiving an instruction for starting a plurality of virtual machines by the DPU, an instruction for creating a plurality of virtual machine managers to a host to which the DPU belongs, wherein one virtual machine manager is configured to manage one virtual machine;
a concurrently starting unit (702) configured to create a plurality of virtual machine managers by the host, and concurrently start a plurality of virtual machines by the plurality of virtual machine managers using a resource on the host; and
an offloading unit (703) configured to offload, in response to a completion of concurrently starting the plurality of virtual machines, the plurality of virtual machine managers from the host to the DPU, and manage the plurality of started virtual machines by the plurality of virtual machine managers using a resource on the DPU.

13. An electronic device comprising a processor and a memory, wherein
the memory stores computer-executable instructions; and
the processor executes the computer-executable instructions stored in the memory to cause the processor to execute the method for controlling the starting of the virtual machine based on the data processing unit according to any of claims 1 to 11.

14. A computer-readable storage medium storing computer-executable instructions, wherein the computer-executable instructions, when executed by a processor, implement the method for controlling the starting of the virtual machine based on the data processing unit according to any of claims 1 to 11.

15. A computer program product comprising a computer program, wherein the computer program, when executed by a processor, implements the method for controlling the starting of the virtual machine based on the data processing unit according to any of claims 1 to 11.
